# EUROPEAN PATENT APPLICATION

(11) **EP 4 813 348 A1**
(43) Date of publication of application: **30.09.2026**
(21) Application number: 26154244.3
(22) Date of filing: 27.01.2026
(51) Int. Cl.: A61C 13/00, A61C 13/083

(54) **FULLY SINTERED DENTAL ZIRCONIA BLOCK AND DENTAL PRODUCT INCLUDING SAME**

(30) Priority: 24.03.2025 KR 20250037621
(71) Applicant: Vatech mcis co., Ltd, Suwon-si, Gyeonggi-do 16648 (KR); Vatech Ewoo Holdings Co., Ltd., Hwaseong-si, Gyeonggi-do 18449 (KR)
(72) Inventor: Hong, Ju Seop, 16648 Suwon-si (KR); Bang, Chang Wook, 16648 Suwon-si (KR); Yang, Gi Uk, 16648 Suwon-si (KR); Kim, Jeong Jun, 16648 Suwon-si (KR)
(74) Representative: Lorenz & Kollegen

(57) **Abstract**

Proposed are a fully sintered dental zirconia block and a dental product including the same. The fully sintered dental zirconia block includes a body to be machined, a stem connected to a bottom surface of the body, and a base connected to the stem. The stem maintains a selected horizontal length from the body to the base. The horizontal length of the stem is 2 mm or more and less than 4 mm.

## Description

### CROSS REFERENCE TO RELATED APPLICATION

The present application claims priority to Korean Patent Application No. 10-2025-0037621, filed March 24, 2025, the entire contents of which are incorporated herein for all purposes by this reference.

### BACKGROUND

### Technical Field

The disclosure relates to a fully sintered dental zirconia block and a dental product including the same.

### Description of the Related Art

Zirconia, a dental ceramic material, is fully capable of replacing metal prosthetics and other ceramic materials in terms of strength and aesthetics. Zirconia is a material that is attracting attention across various industrial fields due to the chemical resistance, wear resistance, and high melting point thereof. Zirconia is also preferred as a biocompatible ceramic material because of being free from concerns regarding cytotoxicity, carcinogens, and heavy metals.

Zirconia has excellent mechanical properties, but a disadvantage that it is difficult to process a final sintered body due to high hardness. To address this problem, a porous zirconia semi-sintered body is first manufactured by primary sintering at a low temperature before completing the final sintered body. The porous zirconia semi-sintered body then undergoes a machining stage, followed by secondary final sintering to complete a prosthesis. Considering the shrinkage during the final sintering process, porous zirconia must be formed with a volume approximately 20% larger than the final size. However, semi-sintered zirconia has a problem that it is difficult to reduce the volume to match the actual size of the tooth of a patient during the final sintering process.

Due to the problems of durability, processing time, and machinability as described above, the production of prosthetics required significant time and expense. It was also difficult to process the final prosthetic into a structure optimally suited to the oral cavity of a patient, thereby limiting the competitiveness of zirconia prostheses.

Therefore, to reduce the fabrication time of prostheses, a technique has recently been proposed that shapes prostheses by directly machining zirconia sintered bodies in a partially sintered state, rather than machining zirconia calcined bodies.

However, machining conventional zirconia sintered bodies into prosthetic forms requires significant material removal, due to the simple rectangular prism shape of the zirconia sintered bodies. This process may cause tool breakage.

### SUMMARY

Accordingly, the disclosure has been made keeping in mind the above problems occurring in the related art, and the disclosure is intended to provide a fully sintered dental zirconia block having a significantly reduced cutting volume and a dental products including the same.

In order to achieve at least one of the above objectives, according to one aspect of the disclosure, there is provided a fully sintered dental zirconia block including: a body to be machined; a stem connected to a bottom surface of the body; and a base connected to the stem, wherein the stem maintains a selected horizontal length from the body to the base, the horizontal length of the stem being 2 mm or more and less than 4 mm.

According to an embodiment of the disclosure, each of a portion connecting the stem and the body and a portion connecting the stem and the base may include a rounded bend.

According to an embodiment of the disclosure, cross-section of the body parallel to a longitudinal direction of the body may include a rounded corner having a radius of curvature ranging from 0.5 mm to 10 mm.

According to an embodiment of the disclosure, the horizontal length of the body may range from 10 mm to 16 mm.

According to an embodiment of the disclosure, the radius of curvature of the rounded bend may range from 0.5 mm to 2 mm.

According to an embodiment of the disclosure, the vertical length of the stem may range from 1 mm to 10 mm.

According to an embodiment of the disclosure, the vertical length of the base may range from 2 mm to 8 mm.

According to an embodiment of the disclosure, the cross-section of the body parallel to a longitudinal direction of the body may have a quadrangular shape including a rounded corner.

According to an embodiment of the disclosure, provided is a dental product including a fully sintered dental zirconia block as described above.

According to the disclosure, a fully sintered zirconia block with a minimized machining regionally may be provided to reduce machining time required for manufacturing dental products.

According to an embodiment of the disclosure, a minimally processed sintered zirconia block with excellent crack resistance and superior machinability can be provided.

According to an embodiment of the disclosure, a fully sintered zirconia block with excellent crack resistance and machinability may be provided.

The effects of the disclosure are not limited to the aforementioned effects, and other effects of the disclosure not explicitly described will be clearly understood from the description of the claims by a person having ordinary skill in the technical field, to which the disclosure pertains

### BRIEF DESCRIPTION OF THE DRAWINGS

The accompanying drawings of the specification are provided to illustrate example embodiments of the disclosure and aid in the understanding of the technical principle of the disclosure together with the following detailed description, and it should not be understood that the disclosure is construed as being limited to the drawings.
FIG. 1 is a perspective view illustrating a fully sintered dental zirconia block according to an embodiment of the disclosure;
FIG. 2 is a front view illustrating a fully sintered dental zirconia block according to an embodiment of the disclosure;
FIG. 3 is a front view illustrating a fully sintered dental zirconia block according to an embodiment of the disclosure;
FIG. 4 is a front view illustrating a fully sintered dental zirconia block according to an embodiment of the disclosure;
FIG. 5 is a front view illustrating a fully sintered dental zirconia block according to an embodiment of the disclosure;
FIG. 6 is a front view illustrating a fully sintered dental zirconia block according to an embodiment of the disclosure;
FIG. 7 is a front view illustrating a fully sintered dental zirconia block according to an embodiment of the disclosure; and
FIG. 8 is a front view illustrating a fully sintered dental zirconia block according to an embodiment of the disclosure, which is coupled to a mandrel.

### DETAILED DESCRIPTION

Hereinafter, embodiments of the disclosure will be described in detail. However, these embodiments are presented merely as examples, by which the disclosure is not limited. The disclosure is defined solely by the scope of the claims set forth below.

Unless otherwise specified herein, when a portion such as a layer, a film, a region, or a plate is described as being "on" another portion, it should be understood that the portion may be "directly on" the other portion or indirectly on or above the other portion via an intervening portion.

Unless otherwise specified herein, singular forms may include plural forms. In addition, unless otherwise specified, "A or B" may refer to "including A, including B, or including A and B."

As used herein, the phrase "combination thereof" may refer to, for example, a mixture, a stack, a composite, a copolymer, an alloy, a blend, or a reaction product of constituents.

Methods and materials similar or equivalent to those described herein may be used in the practice or testing of the disclosure, but suitable methods and materials are described herein. Unless clearly stated otherwise in the context, singular forms include plural forms.

It will be understood herein that the terms "comprise", "include", "have", etc. when used in the specification, specify the presence of stated features, numbers, steps, operations, elements, parts, components, materials, and/or combinations thereof but do not preclude the presence or addition of one or more other features, numbers, steps, operations, elements, parts, components, materials, and/or combinations thereof.

As used herein, the term "a combination thereof" indicates a mixture or combination of two or more components described. The combination thereof may refer to, for example, a mixture, a stack, a composite, a copolymer, an alloy, a blend, or a reaction product of constituents.

As used herein, the term "and/or" refers to including any and all combinations of one or more of the items described in relation thereto. The term "or" in this specification refers to "and/or".

It will be understood that, although the terms "first", "second", etc., may be used herein to describe various elements, these elements should not be limited by these terms. These terms are only used to distinguish one element from another element.

Hereinafter, example embodiments will be described in more detail with reference to the drawings.

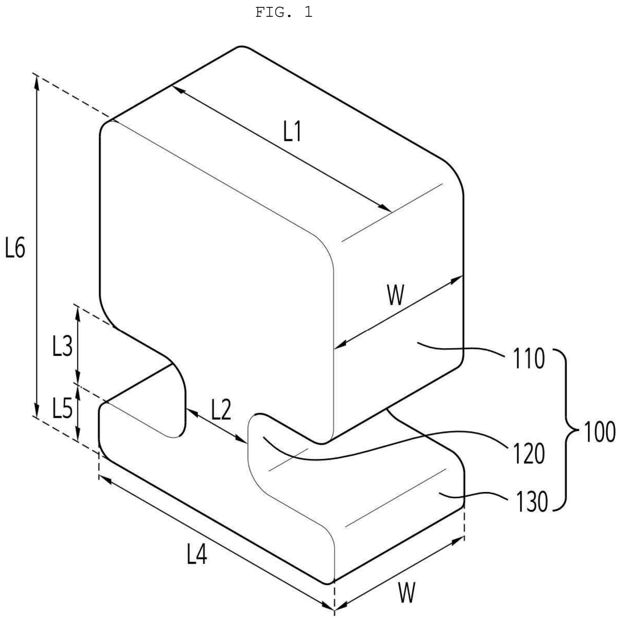

FIG. 1 is a perspective view illustrating a fully sintered dental zirconia block 100 according to an embodiment of the disclosure.

Referring to FIG. 1, the fully sintered dental zirconia block 100 may include a body 110 to be processed, a stem 120 connected to the bottom surface of the body 110, and a base 130 connected to the stem 120.

The body 110 is a portion that is machined during the manufacturing of a dental product. For example, when manufacturing a crown, which is a tooth model for implant procedures, the body 110 is directly machined to form the tooth model. In general, machining of the body 110 may be performed using computer-aided design (CAD) and computer-aided manufacturing (CAM) methods. Specifically, the tooth model may be first scanned, and a restoration may be modeled based on the scanned data and input into a machining tool to process the zirconia block into the restoration. Here, the machining tool may be a milling machine.

The cross-section of the body 110 parallel to the longitudinal direction may have a rectangular parallelepiped shape with rounded corners. The radius of curvature of the rounded corners of the body 110 may range from 0.5 mm to 10 mm, 1 mm to 10 mm, 1 mm to 9 mm, 1 mm to 8 mm, 1 mm to 7 mm, 1 mm to 6 mm, 2 mm to 6 mm, 3 mm to 6 mm, or 4 mm to 6 mm. In an example embodiment, the radius of curvature of the rounded corner may range from 1 mm to 6 mm. When the cross-section of the body 110 parallel to the longitudinal direction includes rounded corners with a radius of curvature within the aforementioned numerical range, the amount of material removed from the fully sintered dental zirconia block 100 is reduced. When manufacturing a dental product using the fully sintered dental zirconia block 100, the machining time may be reduced and the machinability may be improved. Furthermore, the waste of burs used for machining the fully sintered dental zirconia block 100 may be minimized.

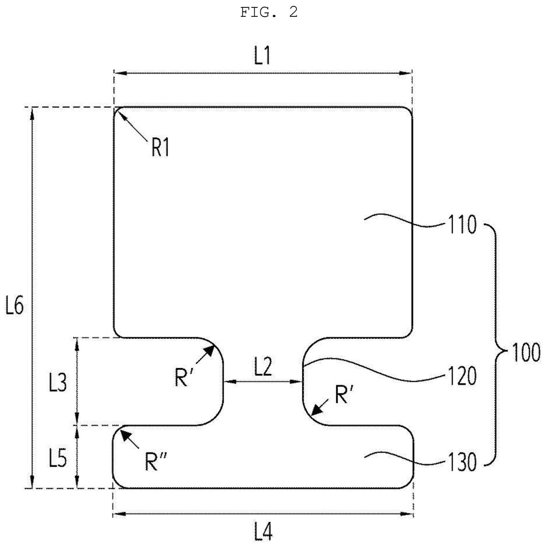

FIGS. 2 to 7 are front views illustrating fully sintered dental zirconia blocks 100 according to various embodiments of the disclosure
Specifically, FIGS. 2 to 7 illustrate cases in which the rounded corners of the cross-sections parallel to the longitudinal direction of the body 110 of the fully sintered dental zirconia block 100 have different radii of curvature.

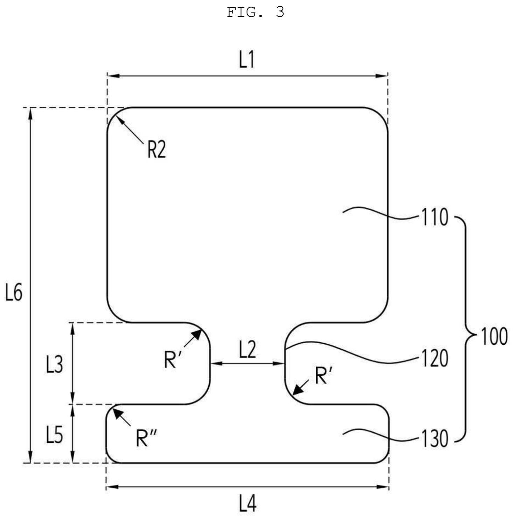

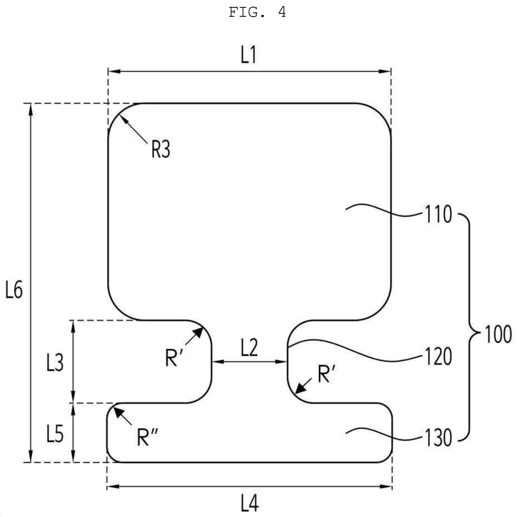

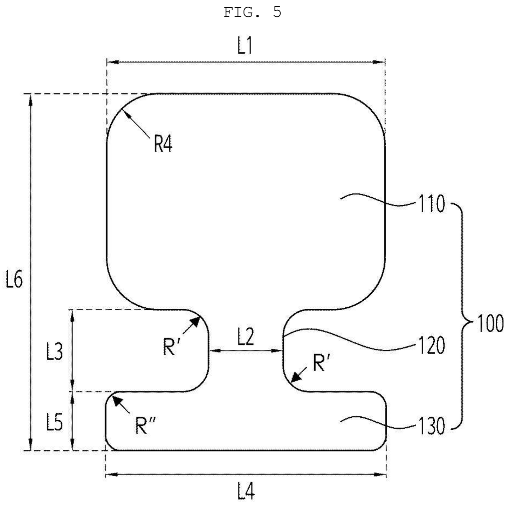

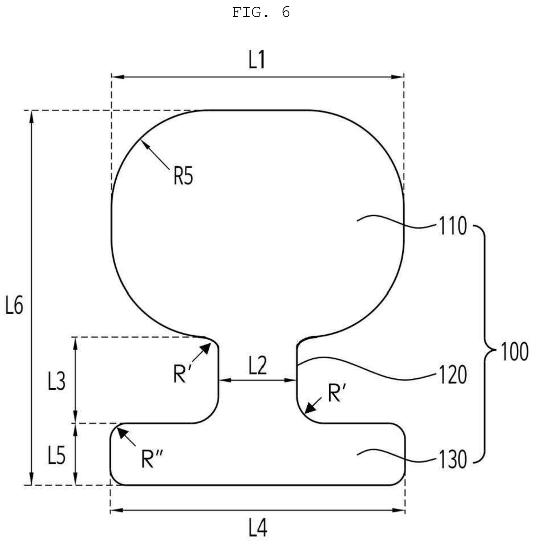

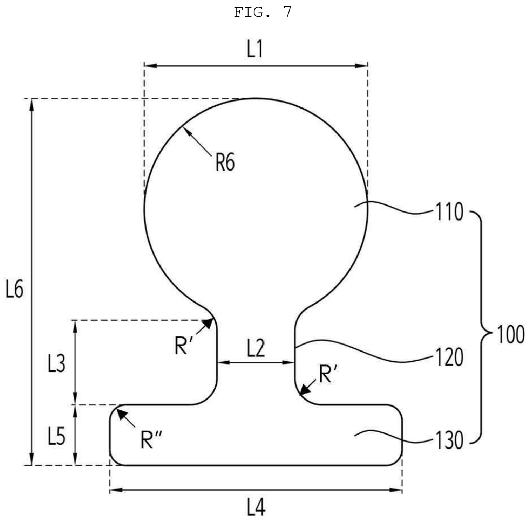

FIG. 2 illustrates a case in which the radius of curvature R1 of the rounded corner of the cross-section of the body 110 of the fully sintered dental zirconia block 100 parallel to the longitudinal direction is 1 mm. FIG. 3 illustrates a case in which the radius of curvature R2 is 2 mm, FIG. 4 illustrates a case in which the radius of curvature R3 is 3 mm, FIG. 5 illustrates a case in which the radius of curvature R4 is 4 mm, FIG. 6 illustrates a case in which the radius of curvature R5 is 5 mm, and FIG. 7 illustrates a case in which the radius of curvature R6 is 6 mm.

Table 1 illustrates measured cutting reduction ratios in machining of a fully sintered dental zirconia block 100 compared to a case in which the radius of curvature of the rounded corner of the cross-section of the body 110 parallel to the longitudinal direction is R1 (1 mm).

**Table 1.**

| | Radius of Curvature of Rounded Corner R (mm) | | | | | |
|---|---|---|---|---|---|---|
| | R1 (1 mm) | R2 (2 mm) | R3 (3 mm) | R4 (4 mm) | R5 (5 mm) | R6 (6 mm) |
| Cutting Reduction Ratio with respect to R1 (%) | - | 1 | 3 | 6 | 10 | 21 |

As illustrated in Table 1, it may be determined that the cutting reduction ratio increases as the radius of curvature of the rounded corner of the cross-section of the body 110 parallel to the longitudinal direction increases from R2 to R6. However, to reduce the cutting volume during machining, the radius of curvature of the rounded corner of cross-section of the body 110 parallel to the longitudinal direction cannot increase infinitely. Considering the maximum size of a molar of an adult male (approximately 12 mm), it is desirable to design the radius of curvature of the rounded corner of the cross-section of the body 110 parallel to the longitudinal direction to be 6 mm or less. However, this is limited to the maximum size of the molar of an adult male. For larger prostheses, the radius of curvature of the rounded corner may range from 1 mm to 6 mm.

The horizontal length L1 of the body 110 may range from 10 mm to 16 mm, 11 mm to 16 mm, 12 mm to 16 mm, 12 mm to 15 mm, or 12 mm to 14 mm.

Referring again to FIG. 1, the thickness W of the body 110 may range from 10 mm to 20 mm, 10 mm to 18 mm, 12 mm to 18 mm, 12 mm to 16 mm, or 12 mm to 14 mm. The width L1 and the thickness W of the body 110 are set to correspond to the specifications of the milling machine and tools used to process the body 110. When the width L1 and the thickness W of the body 110 are within the aforementioned numerical range, the fully sintered dental zirconia block 100 may not only have improved resistance to cracking but also improved machinability.

In addition, the vertical length of the body 110 (meaning the length in the up-down direction in FIG. 1) may range from 15 mm to 22 mm, 16 mm to 22 mm, 16 mm to 21 mm, or 16 mm to 20 mm. The vertical length of the body 110 is set to correspond to the specifications of the milling machine or cutting tool, matching the aforementioned horizontal length L1 and thickness W of the body 110, and may be set to correspond to the vertical length L3 of the stem 120 and the vertical length L5 of the base 130 to be described later.

The stem 120 may be connected to the lower end of the body 110 and the upper end of the base 130. The stem 120 may serve to support the body 110.

The stem 120 may be a columnar body which extends vertically. According to an embodiment of disclosure, the stem 120 may be connected to the central portion of the bottom surface of the body 110 and the central portion of the top surface of the base 130 while maintaining a constant horizontal length in the section from the bottom surface of the body 110 to the top surface of the base 130.

The horizontal length L2 of the stem 120 may be 2 mm or more and less than 4 mm, 2.2 mm or more and less than 4 mm, 2.5 mm or more and less than 4 mm, 2.8 mm or more and less than 4 mm, 3 mm or more and less than 4 mm, 3.2 mm or more and less than 4 mm, or 3.5 mm or more and less than 4 mm. When the transverse length L2 of the stem 120 falls within the aforementioned numerical range, it is possible to reduce the amount of material removed from the fully sintered dental zirconia block 100 during the machining process for manufacturing the dental product and to prevent breakage or deformation of the fully sintered dental zirconia block 100. In an example embodiment, the width L2 of the stem 120 may be 3 mm or more and less than 4 mm. Accordingly, minimizing the size of the stem 120, which is removed from the final manufactured dental product, may minimize material consumption and tool fatigue while preventing breakage of the stem 120 during the machining process that would occur if the horizontal length L2 of the stem 120 is excessively short.

The vertical length L3 of the stem 120 may range from 1 mm to 10 mm, 2 mm to 10 mm, 2 mm to 9 mm, 2 mm to 8 mm, or 2 mm to 7 mm. Because the vertical length L3 of the stem 120 has the aforementioned numerical range, the stem 120 may serve to support the body 110 while preventing breakage during machining of the fully sintered dental zirconia block 100. This may also enable the body 110 and the base 130 to be distinguished during the cutting process of the body 110, thereby preventing the base 130 from being unintentionally machined by the cutting tool.

The thickness W of the stem 120 may range from 10 mm to 20 mm, 10 mm to 18 mm, 12 mm to 18 mm, 12 mm to 16 mm, or 12 mm to 14 mm. When the thickness W of the stem 120 falls within the aforementioned numerical range, not only is the resistance to cracking of the fully sintered dental zirconia block 100 improved, but the machinability may also be improved.

The region where the stem 120 is connected to the body 110 and the region where the stem 120 is connected to the base 130 may each include a rounded bend R'.

The radius of curvature R' of the rounded bend may range from 0.5 mm to 2 mm, 0.5 mm to 1.8 mm, 0.5 mm to 1.6 mm, 0.5 mm to 1.4 mm, 0.7 mm to 1.4 mm, 0.8 mm to 1.4 mm, or 0.8 mm to 1.2 mm. The rounded bends provided in the connection regions between the stem 120 and the body 110 and between the stem 120 and the base 130 having the aforementioned radius of curvature R' may reduce the amount of material removed when machining the fully sintered dental zirconia block 100 and prevent the fully sintered dental zirconia block 100 from breaking during the machining process.

The base 130 may be positioned at the lowest end of the fully sintered dental zirconia block 100 and serve to finally support the body 110 and the stem 120. The horizontal length of the base 130 may be greater than or equal to the horizontal length of the body 110.

The horizontal length L4 of the base 130 may range from 10 mm to 16 mm, 11 mm to 16 mm, 12 mm to 16 mm, 12 mm to 15 mm, 12 mm to 14 mm, or 13 mm to 14 mm.

The vertical length L5 of the base 130 may range from 2 mm to 8 mm, 2 mm to 7 mm, 2 mm to 6 mm, 3 mm to 6 mm, or 3 mm to 5 mm.

The cross-section of the base 130 parallel to the longitudinal direction may have a rectangular prism shape with rounded corners. The radius of curvature R'' of the rounded corners of the cross-section of the base 130 parallel to the longitudinal direction may range from 0.5 mm to 10 mm, 1 mm to 10 mm, 1 mm to 9 mm, 1 mm to 8 mm, 1 mm to 7 mm, 1 mm to 6 mm, 2 mm to 6 mm, 3 mm to 6 mm, or 4 mm to 6 mm.

The base 130 may be in face-to-face contact with the top surface of the mandrel to fix the fully sintered dental zirconia block 100 to the mandrel. For example, an adhesive may be applied to the surfaces of the base 130 and the mandrel that face each other, or separate coupling members may be engaged with recesses formed in the base 130 and the mandrel, respectively, to fix the fully sintered dental zirconia block 100.

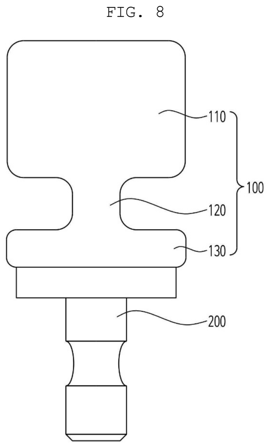

FIG. 8 is a front view illustrating a fully sintered dental zirconia block according to an embodiment of the disclosure, which is coupled to a mandrel.

Referring to FIG. 8, the fully sintered dental zirconia block 100 may be mounted on a mandrel 200 for use. The mandrel 200 may serve to hold the fully sintered dental zirconia block 100 to a machining device when machining the fully sintered dental zirconia block 100. To facilitate machining of the fully sintered dental zirconia block 100, it is desirable to hold the fully sintered dental zirconia block 100 to the mandrel 200.

According to an embodiment of the disclosure, as shown in FIG. 8, the mandrel 200 has a disc which faces and contacts the bottom surface of the base 130 of the fully sintered dental zirconia block100 and a cylinder protruding vertically from the center of the disc in the vertical direction of the disc. The cylinder may have a shape with a concave bend in a middle portion. However, the shape of the mandrel 200 is not limited thereto, and any shape capable of supporting, while facilitating machining of, the fully sintered dental zirconia block 100 may be used without restriction. For example, the upper portion of the mandrel 200 may be rectangular or oval rather than disc-shaped, and the lower portion connected to the upper portion of the mandrel 200 may be handle-shaped with a plurality of recesses rather than being cylindrical.

The method of mounting the fully sintered dental zirconia block 100 to the mandrel 200 is not particularly limited. For example, the fully sintered dental zirconia block 100 may be fixed to the mandrel 200 using an adhesive, or the like.

In another example, a recess may be formed on the upper central portion of the mandrel 200, a separate coupling member may be fixed to the recess. The coupling member may extend from the recess and engage with a recess formed on the central portion of the base 130, thereby connecting and fixing the mandrel 200 and the fully sintered dental zirconia block 100.

A dental product manufactured including the aforementioned fully sintered dental zirconia block according to embodiments of the disclosure may be provided. The dental product may include dental prostheses, orthodontic products, or dental implant products. Dental prostheses may include, for example, crowns, dental crowns, dentures, and the like. Orthodontic products may include, for example, orthodontic brackets. Dental implant products may include, for example, dental implant crowns.

Although the disclosure has been described in detail with reference to the example embodiments, the disclosure is not limited to these embodiments. Various modifications are possible within the scope of the claims, the detailed description of the disclosure, and the accompanying drawings, and such modifications should also fall within the scope of the disclosure.

## Claims

1. A fully sintered dental zirconia block(100) comprising:
a body(110) to be machined;
a stem(120) connected to a bottom surface of the body(110); and
a base(130) connected to the stem(120),
**characterized in that** the stem(120) maintains a constant horizontal length from the body(110) to the base,
the constant horizontal length of the stem(120) is 2 mm or more and less than 4 mm.

2. The fully sintered dental zirconia block of claim 1, wherein each of a portion connecting the stem(120) and the body (110) and a portion connecting the stem (120) and the base (130) comprises a rounded bend.

3. The fully sintered dental zirconia block of claim 1, wherein a cross-section of the body(110) parallel to a longitudinal direction of the body(110) comprises a rounded corner having a radius of curvature ranging from 0.5 mm to 10 mm.

4. The fully sintered dental zirconia block of claim 1, wherein the horizontal length of the body(110) ranges from 10 mm to 16 mm.

5. The fully sintered dental zirconia block of claim 2, wherein the radius of curvature of the rounded bend ranges from 0.5 mm to 2 mm.

6. The fully sintered dental zirconia block of claim 1, wherein the vertical length of the stem(120) ranges from 1 mm to 10 mm.

7. The fully sintered dental zirconia block of claim 1, wherein the vertical length of the base(130) ranges from 2 mm to 8 mm.

8. The fully sintered dental zirconia block of claim 1, wherein a cross-section of the body(110) parallel to a longitudinal direction of the body(110) has a quadrangular shape comprising a rounded corner.

9. A dental product comprising a fully sintered dental zirconia block as claimed in claim 1.
